# EUROPEAN PATENT APPLICATION

(11) **EP 3 179 748 A1**
(43) Date of publication of application: **14.06.2017**
(21) Application number: 15198345.9
(22) Date of filing: 08.12.2015
(51) Int. Cl.: H04W 4/04, B60Q 1/00

(54) **SYSTEM AND METHOD FOR CAR-TO-CAR COMMUNICATION**

(71) Applicant: Harman Becker Automotive Systems GmbH, 76307 Karlsbad (DE)
(72) Inventor: Mauderer, Hans-Peter, 76571 Gaggenau (DE)
(74) Representative: Westphal, Mussgnug & Partner Patentanwälte mbB

(57) **Abstract**

A method for performing a communication between a first vehicle and a second vehicle comprises: generating a first pattern within a lighting unit of the first vehicle, wherein the first pattern represents information about at least one of the first vehicle and a current traffic situation; detecting the first pattern within the second vehicle; and evaluating the detected first pattern to retrieve the information. The method is characterized in that the lighting unit comprises a plurality of individual light sources, the first pattern is generated by changing a measurable characteristic of a subset of the individual light sources, and the first pattern comprises at least one of an icon, a numeral pattern and a textual pattern.

## Description

### TECHNICAL FIELD

The disclosure relates to a system and a method for car-to-car communication, in particular for a bidirectional car-to-car communication.

### BACKGROUND

All vehicles today are equipped with brake lights, which provide a very simple unidirectional car-to-car communication system. The brake lights light up when the brake is applied. The driver of a successive car is thereby informed that the vehicle travelling in front is reducing its speed. However, there is no other information provided to the driver of the successive car when the brake lights light up. The driver of the successive car, therefore, does not know anything else about the current situation of the car travelling in front. As the communication is only unidirectional, to the car travelling in front no information at all is provided about the current driving situation of successive cars.

### SUMMARY

The method described herein includes the following procedures: generating a first pattern within a lighting unit of the first vehicle, wherein the first pattern represents information about at least one of the first vehicle and a current traffic situation; detecting the first pattern within the second vehicle; and evaluating the detected first pattern to retrieve the information. The method is characterized in that the lighting unit comprises a plurality of individual light sources, the first pattern is generated by changing a measurable characteristic of a subset of the individual light sources, and the first pattern comprises at least one of an icon, a numeral pattern and a textual pattern.

A car-to-car communication system comprises: a lighting unit in a first vehicle, the lighting unit being configured to generate a first pattern, wherein the first pattern represents information about at least one of the first vehicle and a current traffic situation; a detection unit in a second vehicle, the detection unit being configured to detect the first pattern; and a processing unit which is coupled to the detection unit, the processing unit being configured to evaluate the detected first pattern to retrieve the information, wherein the lighting unit comprises a plurality of individual light sources, the lighting unit is configured to generate the first pattern by changing a measurable characteristic of a subset of the individual light sources, and the first pattern comprises at least one of an icon, a numeral pattern and a textual pattern

Other systems, methods, features and advantages will be or will become apparent to one with skill in the art upon examination of the following detailed description and figures. It is intended that all such additional systems, methods, features and advantages be included within this description, be within the scope of the invention and be protected by the following claims.

### BRIEF DESCRIPTION OF THE DRAWINGS

The method may be better understood with reference to the following description and drawings. The components in the figures are not necessarily to scale, emphasis instead being placed upon illustrating the principles of the invention. Moreover, in the figures, like referenced numerals designate corresponding parts throughout the different views.
Figure 1, including Figures 1A - 1C, illustrates in schematic diagrams several examples of different traffic situations.
Figure 2 illustrates in a schematic diagram an exemplary arrangement of a plurality of individual light sources.
Figure 3, including Figures 3A - 3C, illustrates in schematic diagrams exemplary patterns.
Figure 4 is a block diagram of an exemplary car-to-car communication system.
Figure 5 is a flowchart of an exemplary method for car-to-car communication.

### DETAILED DESCRIPTION

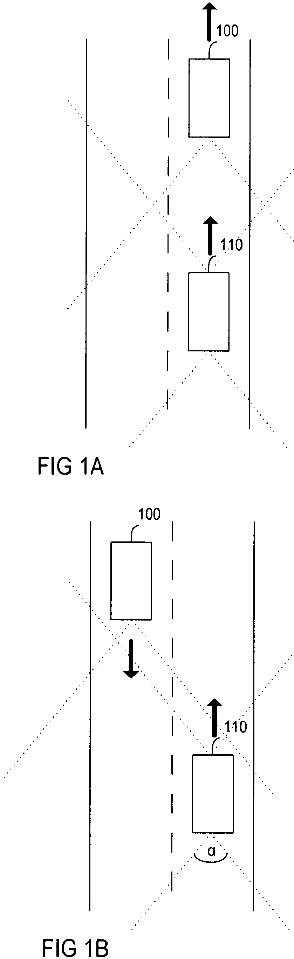

Referring to Figures 1A - 1C, different traffic situations are illustrated. Referring to Figure 1A, for example, a first vehicle 100 may drive in a first direction. A second vehicle 110 may drive on the same lane behind the first vehicle 100 in the same direction. The driver of the second vehicle 110, therefore, can generally see the rear lights of the first vehicle 100. The rear lights may include the rear position lamps (tail lamps), stop lamps (brake lights) and center high mounted stop lamp (CHMSL), for example. The driver of the first vehicle 100, when looking into the side mirrors or the rear-view mirror, may see the front lights of the second vehicle 110, for example. The front lights may include the head lights and daytime running lights, for example.

Now referring to Figure 1B, the first vehicle 100 may drive on a first lane of a road in a first direction. The second vehicle 110 may drive on a different lane of the same road in a direction opposite to the direction of the first vehicle 100. The first vehicle 100 and the second vehicle 110, therefore, will pass each other at a certain point. As long as the first vehicle 100 and the second vehicle 110 are moving towards each other, both drivers may, for example, see the front lights of the other vehicle. After passing each other, the vehicles will drive away from each other and the drivers may, when looking into the side or rear-view mirrors, see the rear lights of the other vehicle.

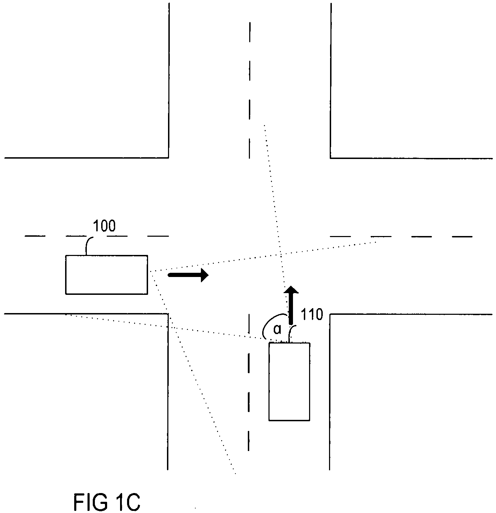

When driving towards each other at a junction from different directions, as is illustrated in Figure 1C, each driver may see the front lights of the other vehicle. Figures 1A - 1C illustrate only three different traffic situations. Many other traffic situations may arise. In some traffic situations it may also be possible that a driver is able to see lights, which are mounted at the side or any other position of another vehicle. Instead of only two vehicles, more than two vehicles may be driving at a certain distance from each other, either in the same or in different directions. The vehicles may be driving on the same lane or on different lanes. Therefore, from one vehicle the lights (back lights, front lights or any other lights) of one or more than one other vehicle may be visible at a certain time. However, apart from an activation of the brake lights, which indicates a braking maneuver of a vehicle, the drivers do not have many possibilities to get information about the other vehicle(s) and the current traffic situation. Therefore, it is often difficult for a driver to assess a current traffic situation.

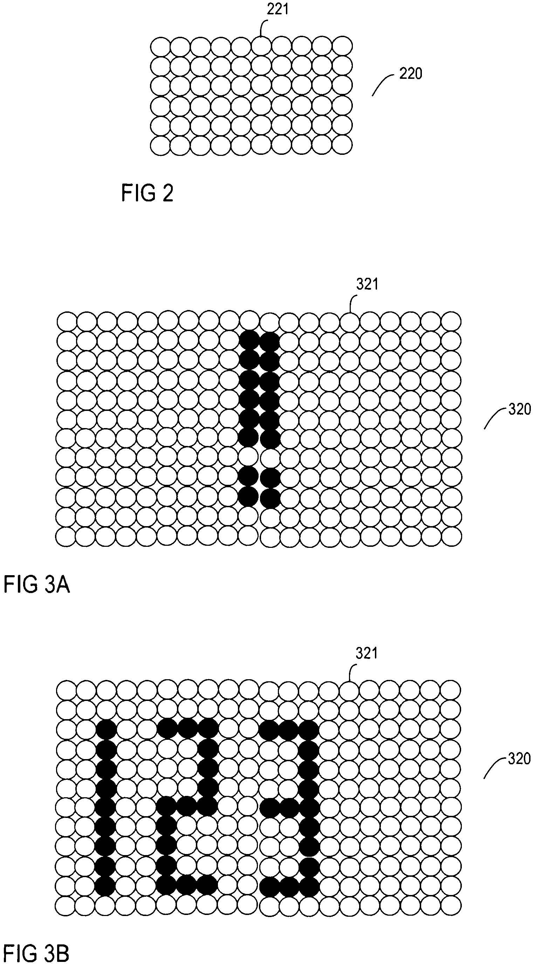

In the past, most vehicle lights included one or more light bulbs. Today, however, light bulbs are being more and more replaced by different light sources such as xenon lamps or light emitting diodes (LEDs), for example. One lighting unit (e.g. one headlamp or one brake light) may include a plurality of individual light sources such as LEDs, which may be arranged in clusters. Such a lighting unit 220 is illustrated by means of Figure 2. In Figure 2 the lighting unit 220 may be a daytime running lamp, for example, which includes a total of 60 individual light sources 221 arranged in a rectangle. This is, however, only an example. Any vehicle light such as a brake light, a center high mounted stop light or a headlamp, for example, may comprise a cluster of light sources as is illustrated in Figure 2. The lighting unit 220 may include more or fewer individual light sources 221 than are illustrated in Figure 2. Generally, due to cost reasons, it is desirable to use as few individual light sources 221 as possible. Some lighting units 220 may only include 20 individual light sources 221 or even less. Further, the individual light sources 221 may form other shapes than rectangles. As non-limiting examples, the individual light sources 221 may be arranged in squares, circles or curved lines. Especially daytime running lights, but also brake lights or other lighting units, are often designed in a way that is typical for a certain make of car.

Referring to Figures 3A - 3C, such lighting units 320, which include a plurality of individual light sources 321, are used for car-to-car communication. By changing a measurable characteristic of at least one of the individual light sources 321, information may be transmitted to other vehicles close by. For example, the brightness of a subset of the plurality of light sources 321 may be reduced or intensified. Other measurable characteristics include the luminous color, for example. These are, however, only examples. Any other characteristics which may be detected from a different vehicle may be changed within a subset of the individual light sources 321 to implement a car-to-car communication.

The subset of individual light sources 321 whose characteristics are changed may be chosen such that they form a pattern within the plurality of light sources 321. The pattern may include at least one of an icon, a numeral pattern and a textual pattern, for example. Referring to Figure 3A, an icon may include an exclamation point, for example. This is, however, only one example. Other, non-limiting examples include a cross, a circle or an arrow. An icon may include signs, which generally signal that a dangerous situation is at hand or may be expected (e.g. an exclamation point, a flash or any shape of a known traffic sign) or icons which generally signal that everything is in best order and no dangerous situation is to be expected (e.g. a check mark or a thumbs up sign), for example. An icon could also include neutral signs, which just generally inform about a certain situation without giving any indication of whether the situation is dangerous or not.

Referring to Figure 3B, a textual pattern may include a warning such as "stop", for example. Other, non-limiting examples of textual warning patterns include "caution" or "brake", for example. However, forming textual warning patterns is only an example. The textual pattern may also signal that everything is in best order (e.g. "ok") or may just provide general information without giving any indication of whether the situation is dangerous or not (e.g. "brake active" or "speed limit ahead"). It is also possible that a textual pattern only includes a single alphabetic character. Each character of the alphabet may then represent a certain information. As non-limiting examples, an "A" may imply that a hard braking maneuver is currently performed, whereas a "B" may imply that the anti-lock braking system (ABS) is currently active. It is further possible to use two or more alphabetic characters as some kind of code, but without generating actual words, e.g. "AB", "DEF", XYZ". If the code is known to the other vehicles, more information may be transmitted without having to generate long textual patterns. Instead of the Latin script, any other script such as the Arabic script or the Cyrillic script (non-limiting examples) may be used.

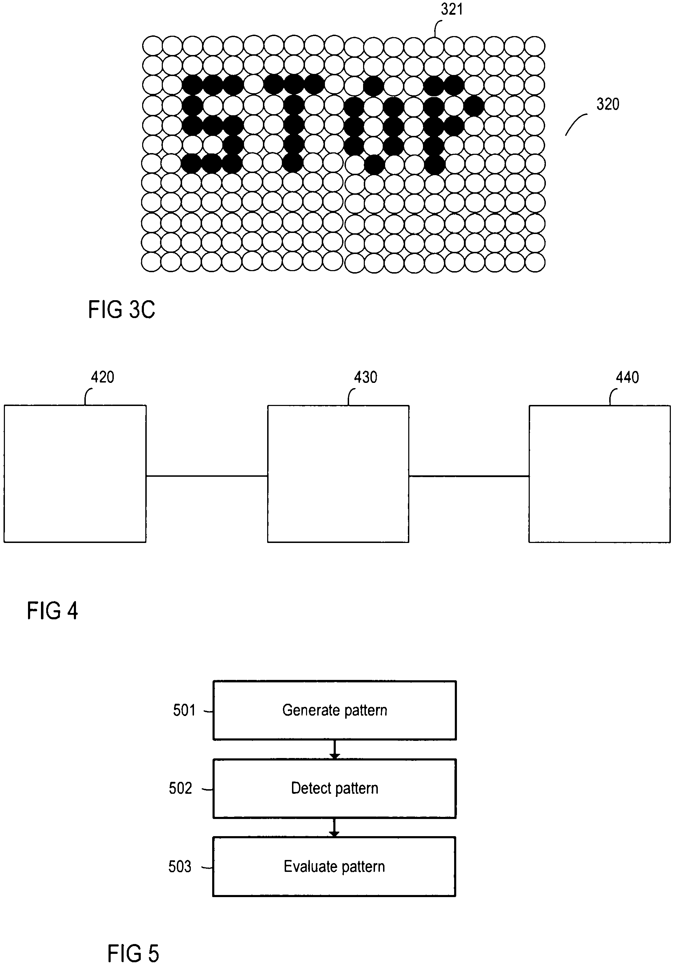

Referring to Figure 3C, a numeral pattern may include any kind of number, e.g. a three-digit number. This is, however, only an example. A numeral pattern may also include one-digit or two-digit numbers, or a number with any other quantity of digits. Each number may represent a certain information, for example. The numeral pattern may thus be used as a kind of numeral code, which is known to the other vehicles. As an example, the three-digit number "600" may be generated when the driver of the vehicle is performing a hard braking maneuver, while the three-digit number "610" may be generated when the vehicle is currently sliding on an icy or wet surface while performing a braking maneuver. In this way, more information may be transmitted to other vehicles without having to generate long textual patterns. Instead of Arabic numerals, Roman numerals or any other kind of numerals may be used.

The maximum size and length of the pattern depend on the number and the size of the individual light sources 321. If more individual light sources 321 are arranged within one lighting unit 320, more icons, bigger icons as well as longer textual or numeral patterns may be generated. Increasing the size of a pattern may also make it easier to detect the pattern, even from a distance.

Furthermore, it is also possible to generate any other kind of pattern, for example vertical stripes, horizontal stripes or oblique stripes. All examples given above, however, are only non-limiting examples.

The pattern may be visible to the human eye. It is, however, also possible that the pattern is not visible to the human eye, but only detectable by an appropriate detection unit. Such a detection unit will be described in more detail further below.

Generating a pattern within only one lighting unit 320 (e.g. within the right brake light of a vehicle), however, is only an example. A pattern may also be generated within more than one lighting unit 320. As a non-limiting example, a first textual pattern (e.g. "AB") may be generated in a first lighting unit 320 (e.g. right brake light) and a second textual pattern (e.g. "12") may be generated in a second lighting unit 320 (e.g. left brake light). In this way, more information may be provided than by just using one lighting unit 320 of a vehicle.

Each pattern may represent a certain information. If the pattern is generated using a lighting unit of the first vehicle 100, for example, the pattern may represent information about the first vehicle 100 and/or a current traffic situation. The information about the first vehicle 100 may include information about a current braking maneuver, for example. As an example, the information may indicate that the driver of the first vehicle 100 is currently performing a panic braking maneuver. Panic braking maneuver in this context means that the driver exerts strong pressure on the brake pedal. For example, he may be performing a full brake application. As a further example, the information may indicate that the vehicle is skidding on a wet, muddy or icy surface while performing a braking maneuver. Other non-limiting examples of information about a current braking maneuver include a total brake failure and a rate of deceleration. Any other information about a braking maneuver, however, may be represented.

The information about the first vehicle 100 may further include information about any driver assistance systems which are currently active. For example, it may be communicated that the Electronic Stability Control (ESC) or anti-lock braking system (ABS) is active or that the lane departure warning (LDW) just detected a move of the first vehicle 100 out of its lane. These are, however, only non-limiting examples. Any other information which may be relevant to the drivers of other vehicles may be communicated. Some vehicles today include a so-called attention assist, which may detect whether the driver of a vehicle is tired or inattentive. Drivers of other vehicles may be warned if, for example, a microsleep of a driver of a nearby vehicle has been detected. By communicating any relevant information to other vehicles, the reaction time of other drivers may be reduced, as they are informed at an early stage about a potentially critical situation. This may help to reduce the risks which may arise in every traffic situation and to reduce the number of critical traffic situations, as well as the number of accidents.

The pattern which is generated by the first vehicle 100 may be detected by means of a detection unit, which is mounted on the second vehicle 110 (not shown in Figures 1 and 2). At least one detection unit may be mounted on the second vehicle 110. The at least one detection unit may be a camera, such as a photo or a video camera, for example. The camera may be configured to take pictures of the surroundings of the second vehicle 110. The pictures may then be evaluated to recognize any patterns generated by the first vehicle 100 using a pattern recognition technique, for example. To evaluate the pictures, any suitable pattern recognition or image processing technique may be used. The camera may be a CMOS (complementary metal-oxide-semiconductor) camera, a CCD (charge-coupled device) camera or a 3D-camera, for example. Any other kind of camera, however, may be used instead. Pictures may be taken continuously while a vehicle is in operation. For example, 25 pictures per second may be taken. This is, however, only a non-limiting example. Using a camera and perform pattern recognition techniques on the pictures taken is only an example. Any other suitable sensor may be used that allows to detect a pattern generated by the first vehicle 100.

Some detection units may only be able to detect patterns within a certain area relative to the vehicle. A camera, for example, has a certain field of view, also called field of vision (FOV) or angle of view. The field of view is generally the extent of the observable world that is seen at any given moment. In the field of cameras, the field of view is that part of the world that is visible through the camera at a particular position and orientation in space. Objects outside the field of vision when the picture is taken are not recorded on the photograph. In Figures 1A to 1C, the field of vision of several detection units mounted on the first vehicle 100 and the second vehicle 110 is indicated by means of dotted lines. In the example given in Figure 1, a certain area in front of each vehicle 100, 110 as well as a certain area behind each vehicle 100, 110 may be monitored. The angle α defines the field of vision of the detection units in Figure 1. The angle α may have any value between 0° and 360°, depending on the kind of detection unit mounted on the vehicle.

A detection unit may be fixedly mounted on a vehicle 100, 110. The detection unit will then always observe the same area, relative to the respective vehicle. It is, however, also possible to movably mount the detection unit on a vehicle. For example, the detection unit may be configured to detect other vehicles and to position itself in order to be able to correctly detect any patterns that might be generated by the other vehicle. This is illustrated by means of Figure 1C. In this example, the second vehicle 110 is approaching the first vehicle 100. The second vehicle 110, however, is not approaching from the front or from the back of the first vehicle 100. The second vehicle 110 rather is approaching a crossing at an angle of 90° from the first vehicle 100. If the detection unit on the first vehicle 100 was only facing to the front of the first vehicle 100, as is illustrated in Figures 1A and 1B, it might miss the second vehicle 110 approaching from the side. It might therefore also miss any patterns generated by the second vehicle 110. By rotating the detection unit and therefore changing its field of vision, the second vehicle 110, however, may be completely within the field of vision. This is, however, only an example. It is further possible to mount a plurality of detection units on a vehicle, each detection unit monitoring a different section of the surroundings, thereby monitoring the surroundings in every direction around the vehicle.

Referring to Figure 4, a lighting unit 420 generates a pattern, as has already been described in detail above. A detection unit 430 may detect such patterns and provide data representing the pattern to a processing unit 440 for further processing. For example, the detection unit 430 may provide pictures of the patterns to the processing unit 440. The processing unit, e.g. by means of a pattern recognition software, may identify the patterns and analyze their meaning. To the processing unit 440, for example, it may be known what a certain icon or textual pattern means. If a dangerous or potentially dangerous situation is detected, a warning signal may be generated to inform the driver of the other vehicle. For example, a visual, haptic or acoustical warning signal may be generated. As an example, a textual warning may be faded in on a monitor within the other vehicle. The monitor could be a navigation system or a head-up display, for example. As a further example, it is possible to light or flash a warning light on the dashboard of the vehicle. An acoustical warning signal may include any kind of acoustical warning signal or any kind of speech, for example. As a non-limiting example, a voice may inform the driver about the other vehicle's condition or about a traffic situation.

It is further possible that the vehicle itself generates a second pattern to provide the information to even further vehicles. For example, referring to Figure 1A, a third vehicle (not illustrated) driving behind the second vehicle 110 may not be able to detect a pattern generated by the first vehicle 100, as the second vehicle 110 may be blocking the view. It may, however, be necessary that both the second and a third vehicle perform a braking maneuver in order to prevent an accident. The third vehicle may, therefore, be informed by the second vehicle 110 about any dangerous situation initially communicated by the first vehicle 100.

It is further possible that a driver assistance system of the second vehicle 110 is activated when a certain information is transmitted by the first vehicle 100. For example, an automatic pre-braking may be performed by a collision avoidance system of the second vehicle 110 to already reduce a velocity of the second vehicle 110 before the driver of the second vehicle may even react. This is, however, only an example. Any other driver assistance system of the second vehicle 110 may be activated to intervene with the driving behavior of the second vehicle 110, thereby avoiding a collision or reducing the impact of a collision, for example.

In this way, for example, if a traffic jam is detected by a first vehicle 100, any number of following vehicles may consecutively be informed about this potentially dangerous situation and, as a consequence, their speed may be reduced.

It is, however, also possible to inform a vehicle driving in front of any dangerous situations arising behind it. As a non-limiting example, if the second vehicle of Figure 1A detects a motor truck approaching at high speed from behind which may soon collide with the second vehicle 110, the first vehicle 100 may be informed accordingly. The drivers of the first vehicle 100 and the second vehicle may then, for example, avoid a collision by changing to a different lane or increasing their speed.

A method for performing a communication between a first vehicle 100 and a second vehicle 110 is illustrated by means of Figure 5. First, a pattern is generated within a lighting unit of a first vehicle (block 501). This pattern is detected by a second vehicle (block 502). The second vehicle may drive in front of the first vehicle, behind the first vehicle or in any other direction in relation to the first vehicle. Furthermore, the second vehicle may drive in the same or in a different direction than the first vehicle. In the second vehicle the detected pattern is then evaluated (block 503). The pattern may represent information about the first vehicle and/or about a current traffic situation, for example. By evaluating the detected pattern, this information is retrieved. The pattern may be generated by changing a measurable characteristic of a subset of individual light sources of a lighting unit and may include at least one of an icon, a numeral pattern and a textual pattern.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. A method for performing a communication between a first vehicle and a second vehicle, the method comprising:
generating a first pattern within a lighting unit of the first vehicle, wherein the first pattern represents information about at least one of the first vehicle and a current traffic situation;
detecting the first pattern within the second vehicle; and
evaluating the detected first pattern to retrieve the information,
the method is **characterized in that**
the lighting unit comprises a plurality of individual light sources,
the first pattern is generated by changing a measurable characteristic of a subset of the individual light sources, and
the first pattern comprises at least one of an icon, a numeral pattern and a textual pattern.

2. The method of claim 1, further comprising
generating a warning signal within the second vehicle, which is configured to inform a driver of the second vehicle of the information transmitted by the first vehicle.

3. The method of claim 2, wherein the warning signal is a visual, haptic or acoustical signal.

4. The method of any of the preceding claims, further comprising
activating a driver assistance system of the second vehicle in response to the information transmitted by the first vehicle.

5. The method of any of the preceding claims, further comprising
generating a second pattern within a lighting unit of the second vehicle, wherein the second pattern represents at least one of the information received from the first vehicle and information about the second vehicle.

6. The method of any of the preceding claims, wherein the first pattern is generated within more than one lighting unit of the first vehicle.

7. The method of any of the preceding claims, wherein the measurable characteristic is at least one of
a brightness, and
a luminous color
of the individual light sources.

8. The method of any of the preceding claims, wherein the first pattern is visible to the human eye.

9. The method of any of the preceding claims, wherein detecting the first pattern includes taking at least one picture of the lighting unit while the pattern is generated.

10. The method of claim 9, wherein the detected first pattern is evaluated by means of at least one of a pattern recognition technique and an image processing technique.

11. A computer program configured to execute the method of any of claims 1 to 10.

12. A car-to-car communication system comprising
a lighting unit in a first vehicle, the lighting unit being configured to generate a first pattern, wherein the first pattern represents information about at least one of the first vehicle and a current traffic situation;
a detection unit in a second vehicle, the detection unit being configured to detect the first pattern; and
a processing unit which is coupled to the detection unit, the processing unit being configured to evaluate the detected first pattern to retrieve the information, wherein
the lighting unit comprises a plurality of individual light sources,
the lighting unit is configured to generate the first pattern by changing a measurable
characteristic of a subset of the individual light sources, and
the first pattern comprises at least one of an icon, a numeral pattern and a textual pattern.

13. The car-to-car communication system of claim 12, wherein the lighting unit is at least one of
a rear position lamp,
a brake light,
a center high mounted stop lamp,
a headlamp,
a daytime running lamp,
an indicator lamp and
a fog lamp.

14. The car-to-car communication system of claim 12 or 13, wherein each of the individual light sources includes a light emitting diode.

15. The car-to-car communication system of any of claims 12 to 14, wherein the detection unit includes at least one of a video camera and a photo camera.
